Europäisches Patentamt

European Patent Office

Office européen des brevets

(19)

(11) **EP 1 148 107 B1**

(12) **EUROPEAN PATENT SPECIFICATION**

(45) Date of publication and mention
of the grant of the patent:
**02.03.2005  Bulletin 2005/09**

(51) Int Cl.[7]: **C09K 3/00**, C05G 5/00,
C05G 3/00, A01N 25/26,
A01N 25/18

(21) Application number: **99959776.8**

(22) Date of filing: **13.12.1999**

(86) International application number:
**PCT/JP1999/006975**

(87) International publication number:
**WO 2000/036045 (22.06.2000 Gazette 2000/25)**

(54) **COATED BIOLOGICALLY ACTIVE GRAINS**

BESCHICHTETE BIOLOGISCH AKTIVE KÖRNER

GRAINS ENROBES BIOLOGIQUEMENT ACTIFS

(84) Designated Contracting States:
**DE FR**

(30) Priority: **14.12.1998  JP 35458698**

(43) Date of publication of application:
**24.10.2001  Bulletin 2001/43**

(73) Proprietor: **Chisso Corporation
Osaka-shi Osaka 530-0055 (JP)**

(72) Inventors:
• **CHIKAMI, Yoshihiro
Minamata-shi, Kumamoto 867-0062 (JP)**
• **KIMOTO, Narutoshi
Minamata-shi, Kumamoto 867-0066 (JP)**

• **TAKAHASHI, Atsushi
Minamata-shi, Kumamoto 867-0062 (JP)**

(74) Representative: **HOFFMANN - EITLE
Patent- und Rechtsanwälte
Arabellastrasse 4
81925 München (DE)**

(56) References cited:
**EP-A- 0 167 184        EP-A- 0 276 179
EP-A- 0 848 906        EP-A- 0 966 882
WO-A-91/14663         WO-A-92/15538
WO-A-93/06941         JP-A- 9 025 189
JP-A- 10 118 557       US-A- 4 678 710**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to a method for producing particles of biologically active substances whose surface has been coated to form coated biologically active particles. In particular, it relates to a method for producing coated biologically active particles wherein the concentration of volatile substances contained in the coated particles is 500 ppm or less with respect to the coated particles.

Background Art

In the agricultural environment of recent years, where the agricultural population is falling and agricultural workers are ageing, labor-saving and improvement of the working efficiency are being required in the application and spraying operations of biologically active substances such as fertilizers and pesticides. Coated fertilizers, whereby fertilizer particles are coated with resins or sulfur, and coated pesticides, whereby pesticide particles are coated with resins, have been developed and the technology has already been disclosed through patents; and the like.

EP-A-0 966 882 and EP-A-0 848 906 disclose coated agricultural pesticide granules and a process for preparing the same, wherein the coated particles are dried for a predetermined period.

WO-A-93/06941 discloses a process for the coating of particles with resins by spraying with a latex or hard melt polymer in a coating zone of a fluidized bed apparatus, as well as the subsequent drying of the coated particles in a drying zone of the fluidized bed apparatus.

Regarding coated fertilizers, for example a coated particle of urea-potassium nitrate fertilizer which could supply the fertilizer ingredient in a timely manner in step with the absorption by the crop was disclosed in Japanese Patent Unexamined Publication No. 162593/1988, and a multi-layered coated particle fertilizer, whose timing of onset of dissolution could be adjusted, was disclosed in Japanese Patent Unexamined Publication No. 202079/1992.

On the other hand, with regard to coated pesticides, for example, a pesticide ingredient release-retarded coated particle pesticide was disclosed in Japanese Patent Examined Publication No. 5002/1989, and a multi-layer coated particle pesticide, where the granular pesticide was coated with layers consisting of a layer of a highly water-absorbent expanding substance and an olefinic polymer layer, was disclosed in Japanese Patent Unexamined Publication No. 9303/1994.

These coated fertilizers arid coated pesticides retard the release of biologically active substances, represented by fertilizers and pesticides, and are effective materials for labor saving in agricultural operations such as fertilizer application and pesticide spraying.

In particular, coated fertilizers with slow release function of timed-release type, which is consist of a release suppression period (hereinafter referred to as "d1"), where the release of a fertilizer is suppressed for a certain period after application, and a release period (hereinafter referred to as "d2"), where the release is sustained following the passage of a certain period, made the simultaneous application of large amount of the fertilizers with seeds or nursery plants to the paddy field by the slow-release function, and highly increased the labor-saving in fertilizer application.

However, there were some differences between the release function (length of release period, release speed and the like) just after the production and the function after the long-term storage in some cases, though the release control function of the coated biologically active particles, represented by those coated fertilizers and coated pesticides, is quite effective on the biologically active substances. Namely, there were cases where the release function changes with the progress of time after the long-term storage. It was difficult to predict the extent of the changes as the changes with the progress of time was affected by the storage conditions.

Disclosure of the Invention

The present inventors have carried out the research with an aim to develop coated biologically active particles in which the release function does not deteriorate with time after storage.

As a result, in coated biologically active particles where the surface of the uncoated particles containing one or more kinds of biologically active substances is covered with membrane containing a resin, and if the concentration of volatile substances in the coated particles, namely solvents used at the time of the polymerization or the membrane preparation, is 500 ppm or less with respect to the coated particles, it was discovered that the changes with time of the release functions during the storage were extremely small, and the invention was completed on the basis of this knowledge.

Thus, the objective of the present invention is to provide a method for producing coated biologically active particles in which only extremely small changes occur in the release function during the time the coated particles are in storage.

In order to achieve the preceding objective, the present invention provides:

1. a method for producing coated biologically active particles as defined in claim 1 wherein uncoated particles containing a biologically active substance are surface-coated with a coating membrane and the concentration of volatile substances contained in the coated particles is 500 ppm or less with respect to the coated particles,

2. the method as in the preceding item **1**, wherein the concentration of the volatile substances contained in the coated particles is 100 ppm or less with respect to the coated particles,

3. the method as in the preceding item **1**, wherein the concentration of the volatile substances contained in the coated particles is 10 ppm or less with respect to the coated particles,

4. the method as in the preceding item **1**, wherein the concentration of the volatile substances contained in the coated particles is 1 ppm or less with respect to the coated particles,

5. the method as in any one of the preceding items **1** through **4**, wherein the coating membrane contains a resin and a filler,

6. the method as in the preceding item **5**, wherein the filler is homogeneously dispersed in the coating membrane,

7. the method as in any one of the preceding items, wherein the resin is a thermoplastic,

8. the method as in the preceding item **7**, wherein the thermoplastic resin is one or more resin selected from among olefinic polymers or olefinic copolymers,

9. the method as in the preceding item **7**, wherein the thermoplastic resin is one or more resin selected from among polyethylene, polypropylene, ethylene-propylene copolymers, ethylene-carbon monoxide copolymers, ethylene-hexene copolymers, ethylene-butene copolymers, or propylene-butene copolymers,

10. the method as in any one of the preceding items, wherein the solvents are one or more solvents selected from among carbon-based organic solvents or chlorine-based organic solvents,

11. the method as in the preceding item 10, wherein the solvents are one or more solvents selected from among toluene, xylene, tetrachloroethylene, or trichloroethylene,

12. the method as in any one of the preceding items, wherein the biologically active substances are fertilizers,

13. the method as in any one of the preceding items **1** through 11, wherein the biologically active substances are pesticides.

Brief Explanation of the Drawings

FIG.1 is a profile section of a jet-capsulation apparatus used to manufacture the coated biologically active particles mentioned in the present invention.

FIG. 2 is a profile section of a degas process device used to manufacture the coated biologically active particles mentioned in the present invention.

Best Mode for Carrying Out the Invention

The biologically active substances used in the present invention are used with an objective of nurture and protection of the plant bodies of crops, useful plants and agricultural produce, and depending on the objective of use provide effects such as increased yield, increase in quality of agricultural produce, control of disease damage, pest control, control of harmful animals, weed control, and further such effects as growth stimulation, growth control, dwarfing; and the like of agricultural crops. Specifically, fertilizers, pesticides, microorganisms; and the like are examples of these. Especially when coated biologically active particles are used, in cases where the biologically active substance is a fertilizer or a pesticide, a relatively strong effect is obtained with respect to the objective of utilization. According to the present invention, it is appropriate to choose one of said biologically active substances, or to use two or more.

As examples of the fertilizers, in addition to nitrogenous fertilizers, phosphate fertilizers and potassium fertilizers, fertilizers containing vital plant nutrients such as calcium, magnesium, sulfur, iron, trace nutrients, and silicon; and the like can be mentioned.

As specific examples of the nitrogenous fertilizers, as well as the ammonium sulfate, urea, and ammonium nitrate, isobutylaldehyde condensed urea, and acetaldehyde condensed urea, and the like can be mentioned. As examples of the phosphorus fertilizers, calcium superphosphate, fused phosphate fertilizer, calcined phosphate fertilizers, and the like can be mentioned. As examples of the potassium fertilizers, potassium sulfate, potassium chloride, potassium silicate fertilizers, and the like can be mentioned. No particular limitation is imposed on the form of any of these fertilizers. Further, super compound fertilizers or mixed fertilizers, where the total content of the three elements of fertilizers is exceed 30% or more, and also organic fertilizers are appropriate. Fertilizers with nitration inhibitor or pesticides are also appropriate.

As examples of the pesticide, chemicals for disease control, pest control, control of harmful animals, weed control, and control of plant growth can be mentioned, and no limitation in material kind is imposed on the use so long as the pesticide is in these categories.

Disease control chemicals are chemicals that are used to protect agricultural products from the harmful effects of pathogenic microorganisms, bactericide(fungicide) may be mentioned as the main example. Pest control chemicals are chemicals that control pests of agricultural products, insecticides may be mentioned as the main example. Chemicals for the control of harmful animals are chemicals which are used to control plant parasitic tick, plant parasitic nematode, field mouse, birds, and other harmful animals which damage agricultural products, and the like. Weed control chemicals are chemicals that are used to control plants that are harmful to agricultural products, trees, and the like, and are also called herbicides. Chemicals which modify plant growth are chemicals which are used to accelerate or inhibit the physiological function of plants.

The pesticide used in conjunction with the present invention is preferably in solid powder form at normal temperatures, or may be liquid at normal temperatures. Further, according to the present invention, whether the pesticide is soluble, partially soluble or insoluble in water, it may be used and no particular limitation is imposed in this respect.

As exemplary pesticides useful in the practice of the present invention, the following specific examples are mentioned but these are only given as examples and no limitation is imposed herein. Further, pesticides may be of one ingredient or complexes of two or more ingredients.

As examples,

1-(6-chloro-3-pyridylmethyl)-N-nitroimidazolizine-2-irideneamine,
O,O-dierhyl-S-2-(ethylthio)ethylphosphorodithioate,
1,3-bis(carbamoylthio)-2-(N,N-dimethylamino)propane hydrochloride,
2, 3-dihydro-2, 2-dimethyl-7-benzo[b]franyl=N-dibutylaminothio-N-methylcarbamate ,
(2-isopropyl-4-methylpirimidyl-6)-diethylthiophosphate,
5-dimethylamino-1,2,3-tricyan oxalic chloride,
O,O-dipropyl-O-4-methylthiophenylphosphate,
ethyl=N-[2, 3-dihydro-2,
2-dimethylbenzofuran-7-iruoxycarbonyl(methyl)aminothio]-N-isopropyl-β-alaniate,
1 -naphthyl-N-methylcarbamate,
2-isopropoxyphenyl-N-methylcarbamate,
diisopropyl-1, 3-dithioran-2-iriden-malonate,
5-methyl-1, 2, 4-triazolo[3, 4-b]benzothiozole,
1, 2, 5, 6-tetrahydropyrolo[3, 2, 1-ij]quinoline-4-on,
3-aryloxy-1,2-benzoisothiazole-1,1-dioxide,
the sodium salt, the dimethylaminate, or the ethyl ester of 2,4-dichlorophenoxyacetate,
2-methyl-4-clorophenoxyacetate, the sodium salt of or the ethyl ester, or the butyl ester.
2-methyl-4-chlorophenoxybutyrate, the sodium salt or the ethyl ester.
α -(2-naphtoxy) proprionanilide,
S-1-methyl-1-phenylethyl=piperidine-1-carbothioate,
S-((4-chlorobenzyl)-N, N-dietylthiocarbamate
5-tartiallybutyl-3-(2,4-dichloro-5-isopropoxyphenyl)-1,3, 4-oxadiazoline-2-on,
2-[4-(2,4-dichlorobenzoyl)-1,3-dimethylpirazole-5-iloxy]acetophenone,
4-(2, 4-dichlorobenzoyl)-1, 3-dimethyl-5-pirazoryl-p-toluenesulphonate,
3-isopropyl-2, 1, 3-benzo-thiadiazinone-(4)-2, 2-dioxide or the sodium salt of,
2-chloro-4-ethylamino-6-isopropylamino-s-triazine,
2-methylthio-4-ethylamino-6-(1, 2-dimethylpropylamino)-s-triazine,
2-methylthio-4, 6-bis(ethylamino)-s-triazine,
2-methylthio-4, 6-bis(isopropylamino)-s-triazine,
1-(α, α -dimethylbenzyl)-3-(paratryl)urea,
methyl= α-(4, 6-dimetoxypyrimidine-2-ilcarbamoylsulfamoyl)-o-toluate,
2-benzothiazole-2-iloxy-N-methylacetoanilide,
1-(2-chloroimidazo[1,2-a]pyridine-3-ilsulfonyl)-3-(4,6-dimetoxypirimidine-2-ilurea,
S-benzyl=1,2-dimethylpropyl(ethyl)thiocarbamate,
2-chloro-N-(3-metoxy-2-tenyl)-2',6'-dimethylacetoanilide and the like may be mentioned.

Further, as exemplary pesticides in the present invention, substances which induce phytoalexin, a low-molecular weight antibacterial agent which is synthesized by the plant after contact with the substance and builds up in the plant may also be mentioned.

As example of the microorganism, those having the effect of restricting the multiplication of pathological microorganisms, may be used. As specific examples, Trichoderma, (trichoderma rignorama, trichoderma viiridi; and the like), Gliocladium (gliocladium virens; and the like), Sephalosporium, Coniocirium, Sporidesumium, Laetisaria, and other filiform bacteria, Agrobacterium (agrobacterium ratiobacter), Bacillus (bacillus zubutilis), Pseudomonas (pseudomonas cepasia, pseudomonas gourmet, pseudomonas gladioli, pseudomonas fluorescens, pseudomonas aureofacien, pseudomonas putida; and the like), Xanthomonas, Elbinia, Arthrobacter, Collinebacterium, Enterobacter, Azotobacter, Flabobacterium, Streptomyces (S. acromogenas, S. faeopurpulens, S. hygroscopicus, S. nitrosporens, S. barnesis; and the like), Actinoplanus, Alkaligenes, Amorphouspolangium, Cellulomanoas, Micromonospora, Pastulia, Hafnia, Rizobium, Bradilizobium, Celatia, Lastonia (L. solanasearum) and similar bacteria and actinomycete can be mentioned.

Among these, bacteria which produce active antibacterial agents may be preferentially used. Concretely, these are the Pseudomonas bacteria, which has high productivity of antibacterial agents, as exemplary truncated bacteria that produce an antibacterial agent, Pseudomonas cepasia, which produces the antibacterial agent pyrrolnitroline (effective against the Japanese radish seedling damping-off disease bacteria), Pseudomonas flouresens, which produces phenazine carbonate (effective against the wheat damping-off disease bacteria), pyrrolnitroline, pioltheoline (effective against the cotton seedling damping-off disease bacteria, cucumber seedling damping-off disease bacteria), cyanides (effective against the tobacco black root rot bacteria), diacetylfloglucinol (effective against the wheat damping-off disease bacteria), and the like, and further, fluorescent Pseudomonas bacteria (Pseudomonas putida, Pseudomonas flourescens), which produce the iron chelate substance siderophore (pseudobactin, fluorescent siderophore: piobeldin), which allows just plants to use soil iron while denying it to bacterial pathogens, and the like may be mentioned.

As examples of other microorganisms, agrobacterium radiobacter, which produces the bacteriocin agrocin 84 (effective against crown gall bateria) and growth promoting rhizospheric bacteria (PGPR) such as fluorescent Pseudomonas (P. putida, P. flourescens; and the like) and Bacillus, which produce growth promoting substances such as plant hormones, and the like may be mentioned.

Especially the CDU degradable microorganisms (Pseudomonas, Arthrobacter, Collinebacterium, Agrobacterium; and the like) and truncated Streptomyces (for example microorganism engineering deposition No. 10533 which was disclosed in Japanese Patent Publication No. 26462/1993) may be preferentially used as they show a marked suppressive effect against contagious filiform pathogenic bacteria in soil.

No particular limitation is imposed on the composition of the uncoated particles containing biologically active substances used in the present invention so long as they contain one or more biologically active substances. The uncoated particles may be made only of the biologically active substances, or the uncoated particles may be prepared using carriers such as clay, kaolin, talc, bentonite, calcium carbonate, and the like, or the particles may also be made using binding agents such as polyvinyl alcohol, sodium carboxymethylcellulose, starch, and the like. Further, as necessary, they may also contain, for example, surfactants such as polyoxyethylenenonylphenyl ether, wasted molasses, animal oils, plant oils, hydrogenated oils, fatty acids, metal salts of fatty acids, paraffin, waxes, glycerin, and the like.

The uncoated particles can be granulated by Extrusion, fluid layer, rolling, compression, coating, suction method, and the like. According to the present invention, any of the manufacturing methods may be used, but the extrusion method is the easiest.

No particular limitation is imposed on the diameter of the uncoated particles, but for example in the case of fertilizers, it is preferable to be in the range 1.0 to 10.0 mm, and for pesticides in the range 0.3 to 3.0 mm. It is possible to select a certain diameter of the uncoated particles within the preceding range by use of a sieve.

No particular limitation is imposed on the shape of the uncoated particles, but in order to generate the slow release function of time-release type, spherical particles are preferable. Specifically, the coefficient of circularity, which is the measure for investigating the degree of circularity of the particles, may be used, and the desired value given by the formula

$\{(4 \pi \times$ the area of the grain projection) / (length of the outline of the grain projection$)^2\}$ is preferably 0.7 or more, or more preferably 0.75 or more, or even more preferably 0.8 or more. The upper limit of the coefficient of circularity is 1, and as 1 is approached, the particle approaches perfect circularity, and as the shape of the particle collapses from perfect circularity the coefficient of circularity decreases.

When the amount of the core material with a coefficient of circularity of less than 0.7 increases, the release control of the coated biologically active particles, which are obtained from this core material and have the slow release function of time-release type, become insufficient at d1 and the biologically active substances tend to leak more easily. So, it is preferable that the uncoated particles according to the present invention should all have a value of 0.7 or more, but is permissible that a small numbers of the particles may be below the lower limit, as long as the effect of the present invention is not greatly diminished. Further, the coefficient of circularity may be measured by use of the marketed measuring device PIAS-IV (manufactured by PIAS CO.LTD.) or similar device.

The coating membrane of the coated biologically active particles in the present invention may contain resins, or inorganic substances such as sulfur.

For a coating membrane which contains resins, the relative content of the resin relative to the mass of the coating membrane should be within the range of 10 to 100 % by weight, or more preferably in the range of 20 to 100 % by weight.

Further, for a coating membrane which contains inorganic substances, the relative content of the inorganic substances relative to the mass of the coating membrane should be within the range of 20 to 100 % by weight, or more preferably in the range of 50 to 90 % by weight.

No particular limitation is imposed on the use of the resin used in the coating membrane, and thermoplastics resins, thermo-setting resins, emulsions, and the like may be mentioned.

Specific examples of thermoplastics resins are olefinic polymers, vinylidene chloride polymers, diene polymers, waxes, polyesters, petroleum resins, natural resins, fats and their derivatives, and urethane resins.

Examples of the olefinic polymer include polyethylene, polypropylene, ethylene-propylene copolymer, ethylene-carbon monoxide copolymer, ethylene-hexene copolymer, ethylene-butadiene copolymer, polybutene, buteneethylene copolymer, butene-propylene copolymer, polystyrene, ethylene-vinyl acetate copolymer, ethylene-vinyl acetate-carbon monoxide copolymer, ethylene-acrylic acid copolymer, ethylene-methacrylic acid ester copolymer. Examples of the vinylidene chloride polymer include vinylidene chloride-vinyl chloride copolymer.

Examples of the diene polymer include butadiene polymer, isoprene polymer, chloroprene polymer, butadienestyrene copolymer, EPDM polymer, and styrene-isoprene copolymer.

Examples of the waxes include beeswax, vegetable waxes, and paraffin, and the like; examples of the polyester include polylactic acid, polycaprolactone and other aliphatic polyesters, and polyethylene terephthalate and other aromatic polyesters; examples of the natural resin include natural rubber, rosin; and the like; examples of the fat and derivatives thereof include hardened substances, solid fatty acid and metal salts thereof, and the like.

As examples of the thermo-setting resins, phenol resins, furan resins, xylene-formaldehyde resins, ketoneformaldehyde resins, amino resins, alkyd resins, unsaturated polyesters, epoxy resins, silicon resins, urethane resins, and drying oil, and the like may be mentioned.

The thermo-setting resin has numerous combinations of monomers, but according to the present invention no particular limitation is imposed on the varieties and combinations of monomers. Further, besides the polymers from the respective monomers, dimers or polymers may be used, and also polymers of their mixtures. Further, blends of a number of resins of different categories, may also be used.

As the phenol resin, the resulting polymer of condensation reaction of one or more of the phenols selected from phenol, o-cresol, m-cresol, p-cresol, 2, 4- xylenol, 2, 3- xylenol, 3, 5-xylenol, 2, 5-xylenol, 2, 6-xylenole, and 3, 4-xylenol with one or more of the aldehydes, represented by formaldehyde can be used.

As examples of the representative of furan resin, phenol-furfural resin, furfural-acetone resin, furfuryl alcohol resin, and the like may be mentioned.

The xylene-formaldehyde resins which are resulting polymers of condensation reaction of one or more of the xylenes selected from o-xylene, m-xylene, p-xylene, and ethylbenzene with one or more of the aldehydes, represented by formaldehyde can be used.

As examples of the ketone-aldehyde resin, acetone-aldehyde resin, cyclohexanone-formaldehyde resin, acetophenone-formaldehyde resin, higher aliphatic ketone-aldehyde resin, and the like may be mentioned.

As examples of the amino resin, the resultant of condensation reaction of one or more of the monomers containing an amino group selected from urea, melamine, thiourea, guanidine, dicyandiamide, guanamines, aniline, and the like with formaldehyde may be mentioned.

As examples of the alkyd resins, the resins may be either converted or nonconverted types, and the resultant polymers of condensation reaction of one or more of the polyhydric alcohols selected from glycerin, pentaerythritol, ethyleneglycol, diethyleneglycol, triethyleneglycol, propyleneglycol, sorbitol, mannitol, trimethylolpropane, and the like with one or more of the polybasic acids such as phthalic anhydride, isophthalic acid, maleic acid, fumaric acid, sebacic acid, adipic acid, citric acid, tartaric acid, malic acid, diphenic acid, 1, 8-naptharylic acid, or maleic acid adducts of terpene oil, rosin and unsaturated fatty acids, and the like may be mentioned.

Further, as examples of the fatty oil or the fatty acid used to modify alkyd resins, linseed oil, soy oil, perilla oil, fish oil, tung oil, sunflower oil, walnut oil, oiticica oil, castor oil, dehydrated castor oil, distilled fatty acid, cotton seed oil, palm oil, or their fatty acids, or monoglyceride transesterified with gylcerin may be mentioned. Besides these, modified resins such as rosin, ester-rosin, copal, phenolrosin, and the like may be used.

As the unsaturated polyester, the resultant polymers of condensation reaction of one or more of the organic acids selected from maleic anhydride, fumaric acid, itaconic acid, phthalic anhydride, isophthalic acid, terephthalic acid, tetrahydrophthalic anhydride, 3, 6-endomethylenetetrahydrophthalic anhydride, adipic acid, sebacic acid, tetrachlorophthalic anhydride, 3, 6-endodichloromethylenetetrachlorophthalic acid, and the like with one or more polyols selected from ethyleneglycol, diethyleneglycol, 1, 2-propyleneglycol, dipropyleneglycol, hydrogenated bis-phenol A, 2, 2-bis (4-oxyetoxyphenyl) propane, 2, 2- bis (4-oxypropoxyphenyl) propane, and the like, may be mentioned.

Further, with the objective of hardening polyesters, the resulting polymers may be used, which are obtained by adding one or more of the following vinyl monomers selected from styrene, vinyltoluene, diarylphthalate, methyl methacrylate, triarylcyanuric acid, triarylphosphoric acid at the time of condensation reaction.

Examples of the epoxy resin include bis-phenol A, novolak, bis-phenol F, tetrabis-phenol A and diphenolic acid type epoxy resins.

Further, urethanated polyester resins and such complex resins may be used.

As examples of the urethane resins, the resulting polymers of poly-addition polymerization of one or more of the following diisocyanates selected from trilenediisocyanate, 3, 3'-bitrilene-4, 4'-diisocyanate, diphenylmethan-4, 4'-diisocyanate, polymethylenepolyphenylenepolyisocyanate, 3, 3'-dimethyl-diphenylmethan-4, 4'-diisocyanate, methaphenylenediisocyanate, triphenylmethantriisocyanate, 2, 4-trilenediisocyanate, trigenediisocyanate, hexamethylenediisocyanate, isophoronediisocyanate, xylenediisocyanate, dicyclohexylmethandiisocyanate, hydrogenated xylenediisocyanate, naphthalene-1, 5-diisocyanate, and the like, and one or more of the following polyols selected from polyoxypropylene polyol, polyoxyethylene polyol, acrylonitrile-propyleneoxide polymer, styrene-propyleneoxide polymer, polyoxytetramethyleneglycol, adipic-ethyleneglycol, adipic-butyleneglycol, adipinic-trimethylolpropane, glycerin, polycaprolactonediol, polycarbonatediol, polybutadiene polyol, polyacrylate polyol, and the like may be mentioned.

In order to achieve a long-term slow release function, or further a slow release function of timed-release type, it is necessary to completely cover the surface of the uncoated particle with a resin of low water permeability and to form a coating membrane which will hold down the permeation of moisture to an extremely low level. Namely, it is important to form a coating membrane which does not contain cracks or pinholes in it. In particular, in timed-release control type slow release function, in cases where a long d1 is necessary, it is effective to form a coating membrane which has a low permeability on the particle surface. By coating the uncoated particle surface with a coating membrane containing a resin of low permeability, moisture which is present outside can gradually penetrate into the particle containing the biologically active substance.

For that purpose, it is effective to coat the uncoated particle with a coating membrane containing a thermoplastic resin, and further, as examples of the thermoplastic resins, olefinic polymers, olefinic copolymers, vinylidine chloride polymer, vinylidine chloride copolymer, may be used effectively.

In particular, polyethylene, polypropylene, ethylene-propylene copolymers, ethylene-carbon monoxide copolymers, ethylene-hexene copolymers, ethylene-butene copolymers, propylene-butene copolymers, or blends of these may be mentioned as examples of the most preferable coating materials. If a coat with no pinholes or cracks is formed using these coating materials, the amount of moisture penetration will be extremely low.

Further, according to the present invention, and within a range that does not compromise the effectiveness of the present invention, fillers and surfactant and the like may be added to provide hydrophilic properties. As examples of the filler, talc, clay, kaolin, bentonite, sulfur, white mica, yellow mica, micaeceous iron oxide, metal oxides, silicates, glass, alkaline earth metal carbonates, sulpfates, starch, and the like, may be mentioned and as examples of the surfactant, nonion surfactant represented by polyol fatty acid esters, may be mentioned.

Volatile substances used in the present invention mean substances whose vapor pressure is $1 \times 10^{-4}$ P a or higher at 25°C.

As examples of volatile substances contained in coated biologically active particles, solvents used at the time of polymerization (n-hexane; and the like), water, surfactants, unreacted monomer, pre-polymers of low polymerization, and solvents used at the time of formation of coat, and the like may be mentioned.

No particular limit is imposed on the method for coating the surface of the uncoated particle containing the biologically active substance, for examples, spraying the molten coating material on the surface of the uncoated particle, spraying a solution of the coating material which has been dissolved in a solvent onto the surface of the uncoated, affixing a powder of the coating material onto the surface of the uncoated particle followed by melting, spraying the surface of the uncoated particle with monomer and causing it to react it on the surface of the uncoated particle to form a resin (coat), and further, dipping the uncoated particle into a dip containing molten coating material liquid, or dissolved coating material liquid, and the like.

The coated biologically active particles in the present invention may be obtained by coating the surface of the uncoated particles, where, for example, uncoated particles containing one or more types of biologically active substances have been manufactured in advance.

As examples of the method of coating the uncoated particles with coating materials which contain resins, affixing to the surface of the uncoated particles by spraying a solution (of the coating material in which the coating material has been dissolved in a solvent capable of dissolving the resin) to form the coat (hereinafter referred to as "solution spraying"), or affixing to the surface of the uncoated particles by spraying a molten liquid of the coating material obtained by melting the coating material by heating, to form the coat (hereinafter referred to as "melt spraying") may be mentioned.

The coated biologically active particles according to the present invention may be obtained by either of the above methods, but from the view point of production efficiency and homogeneity of the obtained membrane, it is preferable method to affix the coating material solution on the uncoated particles in a rolling or fluidizing state by spraying it, followed by evaporation of the solvent by exposure to a hot draft to form the coating membrane.

In the case of dispersing filler in a coating membrane containing resins, it is important that the filler is homogeneously dispersed throughout the coat in order to control the leaching of the biologically active substance well.

According to the present invention, state of even dispersion of the filler in the coating membrane means that the coefficient of variability, determined by the method shown below, is 50% or less. According to the present invention, the coefficient of variability should be preferably 35% or less.

In a section of the coating membrane of a coated particle, where the direction of the coat thickness is lengthwise and the direction parallel to the coat surface is lateral, any ten sections taken of the coating membrane of the coated particle within the range lengthwise by lateral = 20 μm by 50 μm are observed using a scanning electron microscope, where the numbers (of particles) of filler in each section are measured, the measurement results determined where:

(coefficient of variability = standard deviation / average x 100) gives the coefficient of

variability.

In order to obtain a coating membrane wherein fillers are homogeneously dispersed, it is preferable to manufacture the coated biologically active particle according to the present invention by solution spraying.

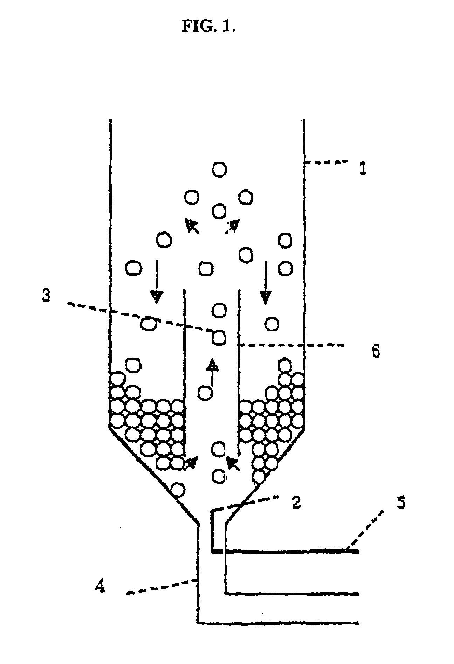

One example of a coating device that may be used in the solution spraying will be described referring to the jet device shown in FIG. 1. In the method, in order to disperse an inorganic filler and other coating materials insoluble in a solvent evenly in a coating material solution liquid, it is especially necessary to stir the coating material solution liquid strongly.

This jet device sends coating material solution liquid through a pipe (5), sprays it through a spray nozzle (2), blows it against the surface of uncoated particles (3) while the particles (3) are in a jet state, and simultaneously and parallel as the surface is coated, a hot draft is blown into a jet tower (1) from a hot air inlet pipe (4) and blown into a guide pipe (6). By means of the high-speed hot draft flow, the solvent in the coating material solution liquid affixed to the particle surface is instantly dried off by evaporation.

Spraying time differs according to the concentration of resin in the coating material solution, the speed of spraying of the solution, the coating ratio; and the like, and these should be appropriately selected according to the objective.

As exemplary coating devices that may be used with the present invention other than the jet device indicated in FIG. 1, a device disclosed in Japanese Patent Publication No. 24281/1967 and Japanese Patent Publication No. 24282/1967, which forms a fluid layer fountain of particles by means of a gas, and sprays a coating agent on the dispersed grain layer which occurs in the center, may be mentioned. As an exemplary revolving coating device, a device disclosed in Japanese Patent Unexamined Publication No. 31914/1995 and Japanese Patent Unexamined Publication No. 195007/1995 may be mentioned where, by means of a revolving drum, lifters, installed in the inner perimeter of the drum transports up powdered granules and then allows them to drop, painting a coating agent on the powdered granular surface as it falls, forming a coat.

In the case of obtaining coated biologically active particles of the present invention by solution spraying, no particular limitation is imposed on the solvent used, but because the dissolving features of each type of resin used for the coating differ with each solvent, it is preferable to select the solvent in combination with the resin to be used.

For example, in the case of using olefinic polymers, vinylidine chloride polymers, vinylidine chloride copolymers, and the like, chlorine solvents and hydrocarbon solvents are preferable, and among them, tetrachloroethylene, trichloroethylene, or toluene are particularly preferable solvents, as the precise and, homogeneous membrane can be obtained, when those solvents are used.

According to the present invention, the volatile substances, i.e. solvents, contained in the coated biologically active particles are 500 ppm or less in concentration relative to the coated particles. If it is 500 ppm or less, it is possible to hold down well the change over time of the releasing function of the coated biologically active particles when they are in long-term storage. More preferably, this value should be 100 ppm or less, and even more preferably, 10 ppm or less, and especially preferably 1 ppm or less.

In coated biologically active particles that have a slow release function of timed-release type, it is preferable that the concentration of volatile substances is 10 ppm or less with respect to the coated particles, and more preferably it is desired to be 1 ppm or less.

The concentration of volatile substances contained in these coated biologically active particles may be measured by well-known analytical methods such as gas chromatography (for example ECD); and the like, following to extraction by use of solvents such as benzene and normal hexane; and the like.

In order to obtain the coated biologically active particles by the method of the present invention, the volatile solvents are removed from the coated biologically active particles by providing a degas process after the coating process. No particular limitation is imposed on the degas method and hot draft, infra-red irradiation, microwaves, and the like being used as methods to apply heat to the coated particles avoiding the damage on the membrane, may be mentioned.

According to the present invention, it is preferable that degas is carried out with a hot draft, and specifically, this process may be carried out by blowing a gas such as heated nitrogen, air or steam, which does not contain any volatile substances, against the coated particles.

In order to carry out this process with gas that contains almost no volatile substances, a gas that contains almost no volatile substances is obtained, and the gas blown against the coated particles is expelled immediately from the degas space. Use of a degas(heating) device with a structure that recirculates the same gas after processing, or where the gas remains in the system, would require a long time for the concentration of volatile substances in the coated particles to reach the limits mentioned in the present invention, and depending on the temperature at the time of the degas process, or the concentration of the volatile substances contained in the gas used in degas, coated biologically active particles as described in the present invention may not be obtained.

In the case of recirculating and reusing the gas after said process, if the gas is separated from and cleaned of volatile substances by passing over activated charcoal; and the like before reuse, it is possible to alleviate the preceding problems. Further, the concentration of volatile substances in the gas preferably is below dew point thereof.

Further, no particular limitation is imposed on the state of the coated biologically active particles at the time of carrying out the degas process, but it is preferable that they should be in a fluid or rolling state. The degas process is possible in a still state, but it would require a long time to make the concentration of volatile substances in the coated particles to be in the range of the present invention, and coated biologically active particles as described in the present invention may not be obtained depending on the temperature at the time of the degas process, or the concentration of the volatile substances contained in a gas used in degas.

Further, in the case that the degas process is carried out by placing the coated particles in a deep vessel such as a beaker to carry out the degas process, and especially when the relative density of the gasified volatile substances is greater than the relative density of the gas used in the degas process, coated biologically active particles as described in the present invention may not be obtained.

No particular limitation is imposed on the temperature of the gas during degas, but in the case that the coating membrane contains thermoplastic resin, if the melting point of a thermoplastic resin contained in the coating membrane is T°C, it is preferable that the temperature is (T- 60) °C or above, and below (T- 5) °C. In the case that a single thermoplastic resin is contained in the coating membrane, and the melting point of the resin is taken as T°C, in the case that there are two or more, the melting points should be compared and the melting point of the resin with the higher melting point of the various resins should be taken as T°C. However, in the case that under that temperature condition the coated particles clump together causing inconveniences to occur during the degas process, the process should preferably be carried out below the melting point of the resin with the lower melting point. The melting point of a resin may be determined using well-known analytical devices such as DSC, and the like.

The degas time will vary depending on the thickness of the coating membrane, the concentration of volatile substances contained in the coated biologically active particles immediately after manufacture; and the like, but should preferably be 0.05 to 2 hours.

The volatile substances removed from the coated biologically active particles of the present invention may be recovered, for example, by cooling, compression, or by use of an absorbative such as activated charcoal, and the like. Thus the volatile substances are not discharged as waste products, but by recycling may be reused in the coating process, this being a preferable processing method from the points of view of environment and cost.

The preceding degas process is especially effective when coated biologically active particles are obtained from solution spraying. This is because in solution spraying, when the solution of the coating material is obtained, a large amount of solvent is used and the concentration of volatile substances contained in the coated particles after completion of the coating procedure tends to be very high.

Because the coated biologically active particles of the present invention show almost no change by time of the release features, it is possible to submit the product to quality control tests immediately after production. Quality control data thus obtained may be swiftly fed back to the manufacturing section, and for example, if there is a deviation from a quality management target value, correction steps may be taken with short loss time, and thus the coated biologically active particles of the present invention have a good function from the view point of manufacturing management.

Examples

The present invention will hereinafter be described more specifically by the following Examples. Incidentally, all designations of " % " as will be used in the following Examples mean wt.% unless expressly noted.

1. Manufactures of coated biologically active particles

(1) Manufactures of coated biologically active particles, A (the manufacture of coated particles 1 to 4)

Using the jet layering coating device indicated in FIG. 1 (tower diameter 450 mm, height 4000 mm, air nozzle diameter 70 mm, angle of cone 50 degrees), urea granules of particle diameter 2.0 to 3.4 mm, coefficient of circularity 0.8 as biologically active particles, were coated to a coating ratio of 12% with a coating material given in Table 1, to manufacture coated particles 1-4. This was carried out according to the following manufacturing conditions.

Further, the coating ratio is the ratio of the sum of the mass (A) of the uncoated particle and the mass (B) of the coating membrane taken as 100% by mass of the coated particle, and the mass (B) of the coating membrane, and is given by the formula [B x 100 / (A + B)].

The solution liquid of the coating material is coating material dissolved and dispersed homogeneously in a volatile substance in the ratios shown in Table 1, and the concentration of the coating material in the coating material solution was 1.0% by mass.

flow nozzle: aperture diameter 0.8 mm full cone type
granular fertilizer: 10 kg
hot draft temperature: 100 to 110 °C
hot draft flow rate: 240 m$^3$/hr
spray flow speed: 0.5 kg/min

Table 1

| | Coating Materials | | | | | | | |
|---|---|---|---|---|---|---|---|---|
| | Coating Material 1 | | Coating Material 2 | | Coating Material 3 | | Coating Material 4 | | Volatile substance and Vapor pressure at 25°C |
| Coated grain 1 | PE | 25 | EVA | 15 | Talc | 60 | SA | 0.5 | Tetrachloroethylene (2,460Pa) |
| Coated grain 2 | ECO | 40 | Starch | 6 | Talc | 54 | | | Toluene (3,793Pa) |
| Coated grain 3 | PE | 39 | PCL | 1 | Talc | 60 | | | Tetrachloroethylene (2,460Pa) |
| Coated grain 4 | PP | 40 | Starch | 6 | Talc | 54 | | | Tetrachloroethylene (2,460Pa) |
| Coated grain 5 | PLA | 50 | | | Talc | 50 | | | Trichloroethylene (9,902Pa) |
| Coated grain 6 | PE | 32 | | | Talc | 68 | | | Tetrachloroethylene (2,460Pa) |
| Coated grain 7 | PE | 60 | | | Sulfur | 40 | | | Tetrachloroethylene (2,460Pa) |

Figures for the coating material indicate parts by mass.

Vapor pressure: from "Industrial Chemistry Handbook, Revised 5th edition", Maruzen, 1988

PE: low-density polyehtylene (MFR=23 g/10 min [JIS K 6760], density: d=0.916 /cm$^3$, melting point 105°C)

EVA: Ethylene vinyl acetate copolymer (MI=20, vinyl acetate 30% by mass)

Talc: average particle diameter 5 μ m

SA: Polyoxyethylenenonylphenyl ether (HLB=13)

ECO: Ethylene-carbon monoxide copolymer (MFR=0.75 g/10 min, CO=0.95% by mass, d=0.93g/cm$^3$, melting point 120°C

PP: Polypropylene (MFR=3 g/10 min [JIS K 6758], density: d=0.90 g/cm$^3$, Vicat softening point: 145°C JIS K 6758])

Table 1 (continued)

| | Coating Materials | | | | |
|---|---|---|---|---|---|
| | Coating Material 1 | Coating Material 2 | Coating Material 3 | Coating Material 4 | Volatile substance and Vapor pressure at 25°C |
| Starch: starch, maize (Wako Pure Chemical Industries, Ltd.)<br>PCL: Poly-ε-caprolactone (Mn=80,000, melting point=60°C)<br>PLA: Poly-L-lactic acid (Mn=60,000)<br>Sulfur: reagent chemical | | | | | |

(2) Manufacture of coated biologically active particles, B (the manufacture of coated particles 5 to 7)

Using a jet layering coating device indicated in FIG. 1 (tower diameter 250 mm, height 2000 mm, air nozzle diameter 50 mm, angle of cone 50 degrees), particle pesticides (bentonite 60 parts by mass, clay 25 parts by mass, Sankyo diazinon hydrate 34 [Kyushu Sankyo Co., 34% diazinon] 15 parts by mass) of particle diameter 1.4 to 1.7 mm, coefficient of circularity 0.8 as biologically active particles, were coated to a coating ratio of 20% with a coating material given in Table 1, to manufacture coated particles 5-7. This was carried out according to the following manufacturing conditions.

Further, the coating ratio is the ratio of the sum of the mass (a) of the uncoated grain and the mass (b) of the coat taken as 100% by mass of the coated grain, and the mass (b) of the coat, and is given by the formula [b x 100 / (a + b)].

The solution liquid of the coating material is coating material dissolved and dispersed evenly in a volatile substance in the ratios shown in Table 1, and the concentration of the coating material in the coating material solution liquid was 1.0% by mass.

flow nozzle: aperture diameter 0.4 mm full cone type
granular fertilizer chemical: 3 kg
hot draft temperature: 100 to 110 °C
hot draft flow rate: 70 m$^3$/hr
spray flow speed: 0.2 kg/min

2. Degas of the volatile substances

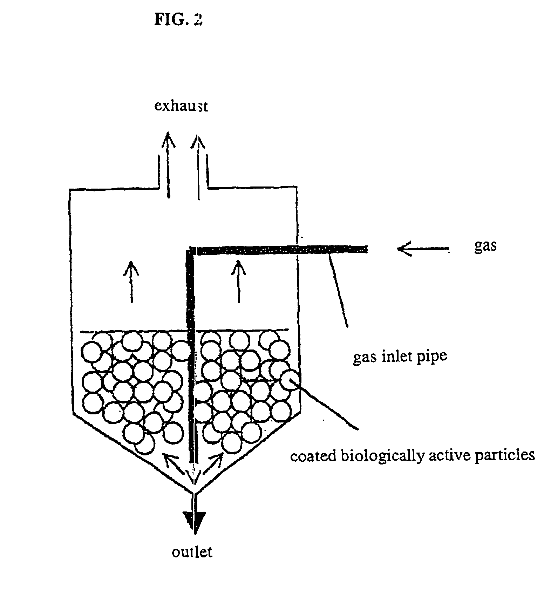

A degas process of volatile substances was carried out using the coated particles 1 to 7 obtained from the coated biologically active particles manufacture A and B. Air, where the concentration of the volatile substances (trichloroethylene, perchloroethylene, toluene) was less than 1 ppm, was used as a supplied gas. The temperature of the gas at the time of the degas process is shown in Table 2. Using 500 g of each of the obtained coated particles 1 to 7, the degas process was carried out using a degas device shown in FIG. **2**. Following the manufacture of the coated particles 1 to 7, the coated particles were fed into the degas device in FIG. 2, air was blown into the device through a hot draft inlet pipe, and the degas process was carried out by blowing air for 30 minutes. Exhaust gasses were discharged continuously through an opening in the upper part of the device, and after processing in a solvent recovery device was reused as a degas processing gas. By carrying out the degas process in this way, the examples 1 to 7 were obtained. Also, coated particles for which the degas process was not carried out are as in comparative example 1 to 7.

Table 2

| | Particles tested | Whether degas process carried out following coating (gas temperature) | Concentration of volatile substances in the coated biologically active particles (ppm) |
|---|---|---|---|
| Ex. 1 | Coated particle 1 | yes (65°C) | 5 |
| Ex. 2 | Coated particle 2 | yes (70°C) | 3 |
| Ex. 3 | Coated particle 3 | yes (70°C) | 2 |
| Ex. 4 | Coated particle 4 | yes (70°C) | 5 |
| Ex. 5 | Coated'particle 5 | yes (68°C) | 23 |

Table 2   (continued)

|  | Particles tested | Whether degas process carried out following coating (gas temperature) | Concentration of volatile substances in the coated biologically active particles (ppm) |
|---|---|---|---|
| Ex. 6 | Coated particle 6 | yes (50°C) | 355 |
| Ex. 7 | Coated particle 7 | yes (75°C) | 8 |
| Comp. Ex. 1 | Coated particle 1 | no | 3000 |
| Comp. Ex. 2 | Coated particle 2 | no | 4500 |
| Comp. Ex. 3 | Coated particle 3 | no | 3600 |
| Comp. Ex. 4 | Coated particle 4 | no | 4200 |
| Comp. Ex. 5 | Coated particle 5 | no | 5500 |
| Comp. Ex. 6 | Coated particle 6 | no | 5200 |
| Comp. Ex. 7 | Coated particle 7 | no | 6700 |

3. Measurement of the concentration of the volatile substances

Measurement of the concentration of the volatile substances was carried out for the Examples 1 to 7 and the Comparative Examples 1 to 7 in Table 2. This was carried out immediately after manufacturing (immediately after completion of coating procedure) for Comparative Examples 1 to 7, and after deaerating process of the volatile substances for the Examples 1 to 7.

In the case that the extracted volatile substance was tetrachloroethylene or trichloroethylene, benzene was used as the extraction solvent, and in the case that the extracted volatile substance was toluene, normal hexane was used as the extraction solvent, 0.5 g of each of the Examples 1 to 7 and of the Comparative Examples 1 to 7 being soaked in 50 ml of the extraction solvent for one week at normal temperature, and the samples for analysis were thus prepared by extracting the volatile substances.

The samples were analyzed by gas chromatography (apparatus: ECD [extraction solvent: benzene], or FID [extraction solvent: normal hexane]), and the concentration of the volatile substances was obtained (Table 2).

4. Function Evaluation Test

Function evaluation tests were carried out as in methods A and B below, the Comparative Examples 1 to 7 immediately after manufacturing (immediately after completion of coating procedure) and the Examples 1 to 7 after degas process of the volatile substances being supplied for the test. Separate from these, 100 g each of Examples 1 to 7 and Comparative Examples 1 to 7 were placed in a 0.063 mm thickness polyethylene bag (product name: "Lead frozen storage bag", Lion Co.), sealed, and after storage for 2 weeks in a cold, dark place were submitted for the function evaluation test in the same way as above.

1) Function Evaluation Test A

10 g each of the samples of Examples 1 to 4 and Comparative Examples 1 to 4 were soaked in 200 ml of water at 25°C and left to stand. After passage of an allotted period the coated biologically active particles were separated from the water and urea leached into the water was determined by quantitative analysis. A fertilizer(the sample tested above) was placed again in 200 ml of fresh water and allowed to stand for at 25°C, the same procedure being carried out after passage of an allotted period. By repetition of this operation, the relationship between the total urea leached into the water and the number of days was plotted on a graph and a curve of leaching speed obtained. The number of days (d1) taken for the leached total to reach 10% was read off from the graph. The results are shown in Table 3.

2) Function Evaluation Test B

This test was to measure the time taken for 10% of inner particle pesticide to be released to the exterior by reason that when cracks appear in the coating membrane of a testing sample, and the coating membrane of the testing sample is destroyed.

Each one particle obtained from the Examples 5 to 7 and the Comparative Examples 5 to 7 was placed in each of the test tubes (12 mm by 72 mm) containing 1.5 ml of water and the tubes were capped. 100 tubes (particles) each of the Examples 5 to 7 and the Comparative Examples 5 to 7 were used, under steady conditions of water temperature of 20°C, the number of damaged coated biologically active particles of each type were counted. Observations were carried out each day from the start of the test. Obtained results were plotted on a graph of the relationship between total released and number of days, and the number of days (d1) taken to reach 10% of total leached was read off from the graph. The results are shown in Table 3.

Table 3

| | Function Evaluation Test | |
|---|---|---|
| | Immediately after manufacture | 2 weeks after manufacture |
| | d1 (days) | d1 (days) |
| Ex. 1 | 8 | 9 |
| Ex. 2 | 40 | 39 |
| Ex. 3 | 199 | 203 |
| Ex. 4 | 52 | 52 |
| Ex. 5 | 10 | 10 |
| Ex. 6 | 30 | 32 |
| Ex. 7 | 98 | 95 |
| Comp. Ex. 1 | 4 | 7 |
| Comp. Ex. 2 | 22 | 31 |
| Comp. Ex. 3 | 133 | 160 |
| Comp. Ex. 4 | 30 | 41 |
| Comp. Ex. 5 | 3 | 6 |
| Comp. Ex. 6 | 4 | 13 |
| Comp. Ex. 7 | 30 | 65 |
| d1: number of days necessary for 10% leaching (days) | | |

As is clear from the results in Table 3, in contrast to the very small variation with time in the release function after 2 weeks storage of Examples 1 to 7, a marked variation with time was observed in Comparative Examples 1 to 7.

Industrial applicability

The coated biologically active particles in the present invention have the following effects.

(1) The variation with time of the release function during storage is small, and a stable quality is maintained.
(2) Due to (1), evaluation can take place immediately after manufacture, and the results may be reflected swiftly to the manufacturing process.

**Claims**

1. A method for producing a coated biologically active particle comprising;
a coating process (A) of applying a solution of a resin dissolved in a solvent to a surface of an uncoated particle containing a biologically active substance and forming a coated particle with a coating membrane by allowing the solvent to evaporate from the solution, and
a degas process (B) of removing volatile substances from the coated particle to obtain a coated biologically active particle having a concentration of the volatile substances of 500 ppm or less with respect to the coated particle, wherein the volatile substances are solvents used at the time of the polymerization or at the time of the preparation of the coating membrane.

**2.** The method for producing a coated biologically active particle as in claim 1, wherein the degas process (B) is carried out with a hot draft.

**3.** The method for producing a coated biologically active particle as in claim 2, wherein the concentration of the volatile substances contained in the hot draft is less than 1 ppm.

**4.** The method for producing a coated biologically active particle according to any one of claims 1 to 3, wherein the concentration of the volatile substances contained in the coated particles is 100 ppm or less with respect to the coated particles.

**5.** The method for producing a coated biologically active particle according to claim 4, wherein the concentration of the volatile substances contained in the coated particles is 10 ppm or less with respect to the coated particles.

**6.** The method for producing a coated biologically active particle according to claim 5, wherein the concentration of the volatile substances contained in the coated particles is 1 ppm or less with respect to the coated particles.

**7.** The method for producing a coated biologically active particle according to claim 1, wherein the coating membrane contains a resin and filler.

**8.** The method for producing a coated biologically active particle according to claim 7, wherein the filler is homogeneously dispersed in the coating membrane.

**9.** The method for producing a coated biologically active particle according to any one of the preceding clams, wherein the resin is a thermoplastic resin.

**10.** The method for producing a coated biologically active particle according to claim 9, wherein the thermoplastic resin is one or more resins selected from olefinic polymers and olefinic copolymers.

**11.** The method for producing a coated biologically active particle according to claim 9, wherein the thermoplastic resin is one or more resins selected from polyethylene, polypropylene, ethylene-propylene copolymers, ethylene-carbon monoxide copolymers, ethylene-hexene copolymers, ethylene-butene copolymers, and propylene-butene copolymers.

**12.** The method for producing a coated biologically active particle according to any one of the preceding claims, wherein the solvents are one or more solvents selected from carbon-based organic solvents and chlorine-based organic solvents.

**13.** The method for producing a coated biologically active particle according claim 12, wherein the solvents are one or more solvents selected from toluene, xylene, tetrachloroethylene, and trichloroethylene.

**14.** The method for producing a coated biologically active particle according to any one of the preceding claims, wherein the biologically active substances are fertilizers.

**15.** The method for producing a coated biologically active particle according to any one of claims 1 to 13, wherein the biologically active substances are pesticides.

**Patentansprüche**

**1.** Verfahren zur Herstellung eines beschichteten, biologisch aktiven Partikels, umfassend:

ein Beschichtungsverfahren (A) aus Auftragen einer Lösung aus einem in einem Lösungsmittel gelösten Harz auf eine Oberfläche eines unbeschichteten Partikels, das eine biologisch aktive Substanz enthält, und Bilden eines beschichteten Partikels mit einer Überzugsmembran, indem man das Lösungsmittel aus der Lösung verdampfen läßt, und

ein Entgasungsverfahren (B) aus Entfernen flüchtiger Substanzen aus dem beschichteten Partikel, um ein beschichtetes, biologisch aktives Partikel mit einer Konzentration der flüchtigen Substanzen von 500 ppm

**14**

oder weniger in Bezug auf das beschichtete Partikel zu erhalten, worin die flüchtigen Substanzen Lösungsmittel sind, die zum Zeitpunkt der Polymerisation oder zum Zeitpunkt der Herstellung der Überzugsmembran verwendet werden.

2. Verfahren zur Herstellung eines beschichteten, biologisch aktiven Partikels gemäß Anspruch 1, worin das Entgasungsverfahren (B) mit einem heißen Luftzug durchgeführt wird.

3. Verfahren zur Herstellung eines beschichteten, biologisch aktiven Partikels gemäß Anspruch 2, worin die Konzentration der flüchtigen Substanzen, die im heißen Luftzug enthalten sind, weniger als 1 ppm beträgt.

4. Verfahren zur Herstellung eines beschichteten, biologisch aktiven Partikels gemäß einem der Ansprüche 1 bis 3, worin die Konzentration der flüchtigen Substanzen, die in den beschichteten Partikeln enthalten sind, 100 ppm oder weniger in Bezug auf die beschichteten Partikel ist.

5. Verfahren zur Herstellung eines beschichteten, biologisch aktiven Partikels gemäß Anspruch 4, worin die Konzentration der flüchtigen Substanzen, die in den beschichteten Partikeln enthalten sind, 10 ppm oder weniger in Bezug auf die beschichteten Partikel ist.

6. Verfahren zur Herstellung eines beschichteten, biologisch aktiven Partikels gemäß Anspruch 5, worin die Konzentration der flüchtigen Substanzen, die in den beschichteten Partikeln enthalten sind, 1 ppm oder weniger in Bezug auf die beschichteten Partikel ist.

7. Verfahren zur Herstellung eines beschichteten, biologisch aktiven Partikels gemäß Anspruch 1, worin die Überzugsmembran ein Harz und Füllstoff enthält.

8. Verfahren zur Herstellung eines beschichteten, biologisch aktiven Partikels gemäß Anspruch 7, worin der Füllstoff homogen in der Überzugsmembran dispergiert ist.

9. Verfahren zur Herstellung eines beschichteten, biologisch aktiven Partikels gemäß einem der vorhergehenden Ansprüche, worin das Harz ein thermoplastisches Harz ist.

10. Verfahren zur Herstellung eines beschichteten, biologisch aktiven Partikels gemäß Anspruch 9, worin das thermoplastische Harz ein oder mehrere Harze ist, die aus olefinischen Polymeren und olefinischen Copolymeren ausgewählt sind.

11. Verfahren zur Herstellung eines beschichteten, biologisch aktiven Partikels gemäß Anspruch 9, worin das thermoplastische Harz ein oder mehrere Harze ist, die aus Polyethylen, Polypropylen, Ethylen-Propylen-Copolymeren, Ethylen-Kohlenmonoxid-Copolymeren, Ethylen-Hexen-Copolymeren, Ethylen-Buten-Copolymeren und Propylen-Buten-Copolymeren ausgewählt sind.

12. Verfahren zur Herstellung eines beschichteten, biologisch aktiven Partikels gemäß einem der vorhergehenden Ansprüche, worin die Lösungsmittel ein oder mehrere Lösungsmittel sind, ausgewählt aus organischen Lösungsmitteln auf Kohlenstoffbasis und organischen Lösungsmitteln auf Chlorbasis.

13. Verfahren zur Herstellung eines beschichteten, biologisch aktiven Partikels gemäß Anspruch 12, worin die Lösungsmittel ein oder mehrere Lösungsmittel sind, die aus Toluol, Xylol, Tetrachlorethylen und Trichlorethylen ausgewählt sind.

14. Verfahren zur Herstellung eines beschichteten, biologisch aktiven Partikels gemäß einem der vorhergehenden Ansprüche, worin die biologisch aktiven Substanzen Düngemittel sind.

15. Verfahren zur Herstellung eines beschichteten, biologisch aktiven Partikels gemäß einem der Ansprüche 1 bis 13, worin die biologisch aktiven Substanzen Pestizide sind.

**Revendications**

1. Procédé de production d'une particule enrobée biologiquement active comprenant :

un procédé d'enrobage (A) qui consiste à appliquer une solution d'une résine dissoute dans un solvant sur une surface d'une particule non enrobée contenant une substance biologiquement active et à former une particule enrobée avec une membrane d'enrobage en laissant le solvant s'évaporer de la solution, et

un procédé de dégazage (B) qui consiste à éliminer les substances volatiles de la particule enrobée pour obtenir une particule enrobée biologiquement active ayant une concentration en substances volatiles de 500 ppm ou moins par rapport à la particule enrobée, dans lequel les substances volatiles sont des solvants utilisés lors de la polymérisation ou lors de la préparation de la membrane d'enrobage.

**2.** Procédé de production d'une particule enrobée biologiquement active selon la revendication 1, dans lequel le procédé de dégazage (B) est réalisé avec un courant d'air chaud.

**3.** Procédé de production d'une particule enrobée biologiquement active selon la revendication 2, dans lequel la concentration en substances volatiles contenues dans le courant d'air chaud est inférieure à 1 ppm.

**4.** Procédé de production d'une particule enrobée biologiquement active selon l'une quelconque des revendications 1 à 3, dans lequel la concentration en substances volatiles contenues dans les particules enrobées est de 100 ppm ou moins, par rapport aux particules enrobées.

**5.** Procédé de production d'une particule enrobée biologiquement active selon la revendication 4, dans lequel la concentration en substances volatiles contenues dans les particules enrobées est de 10 ppm ou moins, par rapport aux particules enrobées.

**6.** Procédé de production d'une particule enrobée biologiquement active selon la revendication 5, dans lequel la concentration en substances volatiles contenues dans les particules enrobées est de 1 ppm ou moins, par rapport aux particules enrobées.

**7.** Procédé de production d'une particule enrobée biologiquement active selon la revendication 1, dans lequel la membrane d'enrobage contient une résine et une charge.

**8.** Procédé de production d'une particule enrobée biologiquement active selon la revendication 7, dans lequel la charge est dispersée de façon homogène dans la membrane d'enrobage.

**9.** Procédé de production ,d'une particule enrobée biologiquement active selon l'une quelconque des revendications précédentes, dans lequel la résine est une résine thermoplastique.

**10.** Procédé de production d'une particule enrobée biologiquement active selon la revendication 9, dans lequel la résine thermoplastique est une ou plusieurs résines choisies parmi les polymères oléfiniques et les copolymères oléfiniques.

**11.** Procédé de production d'une particule enrobée biologiquement active selon la revendication 9, dans lequel la résine thermoplastique est une ou plusieurs résines choisies parmi le polyéthylène, le polypropylène, les copolymères éthylène-propylène, les copolymères éthylène-monoxyde de carbone, les copolymères éthylène-hexène, les copolymères éthylène-butène, et les copolymères propylène-butène.

**12.** Procédé de production d'une particule enrobée biologiquement active selon l'une quelconque des revendications précédentes, dans lequel les solvants sont un ou plusieurs solvants choisis parmi les solvants organiques à base de carbone et les solvants organiques à base de chlore.

**13.** Procédé de production d'une particule enrobée biologiquement active selon la revendication 12, dans lequel les solvants sont un ou plusieurs solvants choisis parmi le toluène, le xylène, le tétrachloroéthylène et le trichloroéthylène.

**14.** Procédé de production d'une. particule enrobée biologiquement active selon l'une quelconque des revendications précédentes, dans lequel les substances biologiquement actives sont des engrais.

**15.** Procédé de production d'une particule enrobée biologiquement active selon l'une quelconque des revendications 1 à 13, dans lequel les substances biologiquement actives sont des pesticides.

FIG. 1.

**FIG. 2**